# EUROPEAN PATENT SPECIFICATION

(11) **EP 0 978 601 B1**
(45) Date of publication and mention of the grant of the patent: **07.07.2004**
(21) Application number: 99202451.3
(22) Date of filing: 26.07.1999
(51) Int. Cl.: E04B 7/20, B29C 44/32, B29C 44/60, B29C 44/46

(54) **Process and device for the manufacture of an insulating element and element so obtained**
Verfahren und Vorrichtung zur Herstellung eines isolierenden Elementes und damit hergestelltes Element
Procédé et dispositif de fabrication d'un élément isolant et élément ainsi obtenu

(30) Priority: 05.08.1998 NL 1009801; 18.08.1998 NL 1009885
(43) Date of publication of application: 09.02.2000
(73) Proprietor: Exploitatiemaatschappij Merode B.V., 5061 KD Oisterwijk (NL)
(72) Inventor: van Opstal, Cornelis Adrianus Petrus, 5066 XA Moergestel (NL)
(74) Representative: Van kan, Johan Joseph Hubert, Ir.

(56) References cited:
- WO-A-91/12391
- WO-A-93/20303
- CH-A- 670 673
- DE-A- 4 101 234
- FR-A- 2 431 012
- GB-A- 1 241 800
- GB-A- 2 309 412
- NL-A- 6 915 155
- NL-A- 7 207 897
- NL-A- 7 611 480
- NL-A- 8 001 432
- NL-C- 1 001 549
- US-A- 3 216 849
- US-A- 4 740 530

## Description

The present invention relates to the process and device for the manufacture of an insulating element, which insulating element consists of a bottom plate provided with a foam material in which one or more ribs are situated. The present invention furthermore relates to an insulating element obtained by such a process, as well as to a roof structure that incorporates one or more of such insulating elements.

At present, in practice a process to manufacture an insulating element is carried out in which ribs are placed lengthwise on a bottom plate. Subsequently an insulating material, for instance mineral wool or foamed material, is placed in the spaces formed by the ribs. Finally, if so desired, the insulating material can be provided with a cover layer, after which the insulating element is sawn to its desired length. In case a foaming material is used as insulating material, tensions arise in the bottom plate due to the exothermal foaming reaction. Such tensions particularly arise after cooling of the foamed material, causing the bottom plate to warp, which is undesirable. Moreover, at the edges of the ribs the foamed material will not fit closely to the ribs, particularly at the surface of the foam layer. Such a bad fit is harmful to the heat-insulating effect of the insulating element manufactured in this way. It also provides a bad exterior. Another drawback of such a process is that in the separate spaces between the ribs the height of the foam layer may vary; in practice often four ribs are applied and there are therefore three such spaces. A variation in foam-layer height leads to insulating elements with a non-uniform exterior, which are therefore marketed as second-rate, or, in the worst case, have to be classified as rejects. A procedure often used in practice to prevent warping during storage of insulating elements manufactured in this way is to place so-called pressure laths diagonally over the ribs. The application of such pressure laths is the final step in the manufacturing process and sees to it that the insulating element is stored slightly prestressed until its actual application on site. Such a procedure requires an additional process step and consequently negatively influences cost price and production rate.

From the Netherlands patent application 6 915 155 an insulated roof boarding is known, obtained by spraying a foamable plastic on a fibreboard, on which at certain intervals stiffening laths are placed longitudinally, in such a way that the foamed polyurethane foam stands against the edges of the laths. This method thus uses the sequence of first manufacturing the entire fibreboard including stiffening laths, and subsequently applying the foam material to the fibreboard.

From the international patent application WO 93/20303 a roof support block is known that is provided with one or more rafter like elements, and is manufactured from a uniform block of plastic, on which said rafter like elements do not extend to the bottom of the uniform block of plastic. Such a construction lacks a bottom plate, which means that having the rafter like elements extend to the bottom would have a disastrous influence on the required construction strength of such a roof support block.

From FR-A-2.431.012 a panel suitable for the direct installation of elements of cover is known wherein its upper surface can be a synthetic resin foam body or that of a sheet equipping and/or protecting foam.

The insulating element mentioned at the beginning of this document is known as such from the Netherlands patent application NL 8 802 465. The insulating roof element known from that application contains a rectangular plate of plastic foam, in which each foam plate has already been provided with a rib or spacing lath at the factory, which spacing laths maintain an interspace between the rafters that serve as support for the roof tiles and the top of the foam plates, enabling rainwater or snow water (so-called seepage) to flow away. However, this publication does not give further information on how the production of the insulating roof elements is carried out.

Dutch patent NL 1 001 549 relates to an insulating plate, as well as to its manufacturing process. According to this Dutch patent, a foaming material is sprayed onto a carrier in a spray station, whereupon directly after the spray station a cover layer material is applied to the foaming material, and the cover layer material used is a diffusion-impervious layer to prevent pentane to escape from the foaming material. Particular data regarding the moment the ribs are placed on the carrier cannot be deduced from this patent.

Furthermore, from the Netherlands patent application NL 9 000 797 a sandwich-combi roof element is known, which successively consists of at least a package of layers, like a layer of plywood, a layer of plastic foam material and a layer of mineral wool, in which the package of layers has been applied between the constructive ribs, which run longitudinally over the element. From this publication no data are known regarding the manufacture of such a sandwich-combi roof element.

European patent application 0 222 284 relates to a method for the assembly of insulating elements, from which, however, no further information regarding the manufacture of insulating elements can be deduced.

The objective of the present invention is therefore to provide a process and device for the manufacture of an insulating element, which process eliminates the drawbacks known from the prior art. Moreover, it is desirable to manufacture insulating elements at a high production rate and of constant quality.

Another objective of the present invention is to provide a process for the manufacture of an insulating element, resulting in an insulating element that will not be subjective to warping over a long period of time.

Another objective of the present invention is to provide an insulating element that virtually has no thermal bridges, guaranteeing an optimal heat-insulating effect.

Another objective of the present invention is to provide a symmetrical insulating element that, particularly for the use in pyramid roofs, can be used completely, that is to say without any waste formation.

Another objective of the present invention is to provide an insulating element that has sufficient strength and stiffness to be used directly in a structure.

The process to manufacture an insulating element, as mentioned in the beginning of this document, comprises the following steps:
a) the application of a foam material to the bottom plate by spraying a foaming material and exerting a foam forming reaction,
b) the formation of one or more interspaces in the foam material formed in this way, and
c) the placing of ribs in the interspaces formed in this way wherein the interspaces extends to the bottom plate.

The insulating element in accordance with the present invention is particularly suitable for topping off roofs of houses.

The present invention thus differs essentially from the method known from the prior art in that first foam material is applied to the bottom plate, and subsequently the ribs, while in accordance to the prior art first the ribs are applied and subsequently the foam material. To provide the bottom plate entirely with foam first has the result that no tensions are built up in the bottom plate and thus warping is prevented. Moreover, a foam layer of equal thickness will now be obtained over the entire bottom plate because there is no separate dosage of foam material in the spaces between the ribs, as is applicable in accordance with the prior art.

In a special embodiment it is advisable that immediately after spraying of the foaming material, the bottom layer or bottom plate that thus has been provided with foaming material is submitted to microwave treatment.

The present inventors have done extensive research into the foaming process and have found that the foaming can take place reproducibly and verifiably by quickly heating the foaming material applied to the bottom layer, particularly by the application of microwaves. The exothermal foaming reaction on the bottom layer is thus started immediately after mixing of the foam elements in the spray station, resulting in a foam with entrapped gas pockets, while the dimensions of the gas pockets can be contained within the desired limits by the supply of microwaves. Consequently an insulating element with a constant foam quality and therefore insulation value is obtained, irrespective of the moment of production.

Although from the international patent application WO 91/12391 and USA 3,216,849 the application is known of microwaves for the manufacture of foam materials to be used in insulating elements, the opposite holds for the particular, present process steps a) - c). Moreover, no further data regarding residence time and power are mentioned in both afore-mentioned publications.

The process in accordance with the present invention is in particular executed continuously, in which it is advisable that the residence time for subjection to microwave treatment lies between 2 - 20 seconds, and the power is at least 200 Watts. Thus a high production rate is guaranteed while the foaming reaction is controllable within precise limits.

It also is advisable to apply the microwaves at the foaming side of the bottom layer. The microwaves have a limited penetration depth and it is therefore advisable to dose the microwaves at the location where foaming occurs, namely on the bottom layer.

In a specific embodiment of the present process it is advisable that the bottom layer, before being provided with a foaming material, is preheated, particularly by means of an infrared lamp. In accordance with such an embodiment, in each season a bottom layer with a constant, controlled temperature is supplied to the spray station, so that the foaming reaction takes place under precise conditions.

In a preferably used embodiment of the present process it is advisable that the bottom plate, after one or more interspaces have been formed in the foam material, is bent slightly, after which the ribs are placed in the interspaces that have thus been formed. By slightly bending the bottom plate, the interspace in the foam material will somewhat increase in dimension, after which the ribs are placed inside it, so that they will stick in the foam material due to the force developed by the bottom plate, caused by the fact that this plate returns to its original shape. Such a preferably used procedure particularly ensures the ribs to fit well against the foam material, and consequently there will be no negative effect on the heat-insulating effect of the insulating element manufactured in this way.

In order to ensure the ribs to remain in place in the foam material, it is advisable in a specific implementation to attach the ribs to the bottom plate by adherence, preferably by means of a melamine-based adhesive. Thus the ribs are connected to the bottom plate, which gives a stable construction. In accordance with the present invention, the interspaces are formed in the foam material in such a way that they extend to the bottom plate itself, which differs essentially from the roof support block known from the previously mentioned international patent application WO 93/20303.

In a specific embodiment it is, however, advisable to attach the ribs to the bottom plate by means of stapling and/or tacking. Such a method of attachment can also be used, however, as an addition to adherence, if a very strong connection between ribs and bottom plate is required.

In a specific embodiment of the present invention it is advisable that the ribs protrude at one or both ends of the bottom plate. Such a construction is particularly advisable for a simple and efficient assembly of such insulating elements at the construction site.

The formation of one or more interspaces in the foam material that has thus been formed is in accordance with the present process preferably done by means of milling. Milling produces interspaces with a very precise tolerance, thus preventing that the ribs and foam material do not fit well together. Moreover, from a production-technical viewpoint milling is a simple procedure.

In a specific embodiment of the present process it is, however, also possible to form the interspaces in the foam material by means of sawing. Such a method is particularly suitable for small production outputs.

For a fast and controlled reaction for the formation of the foam material on the bottom plate it is advisable that the bottom plate is preheated, preferably by means of an infrared lamp. From a production-technical viewpoint the application of an infrared lamp is a simple procedure and ensures that the bottom plate will not deteriorate. Moreover, the bottom plate will have an equal temperature, preventing in a favourable manner any so-called hot spots, which cause a too fast foam formation and consequently a lumpy exterior.

The foam material that is preferably used is a foam material that shows a high heat-insulating effect and can easily be applied. Moreover, from an environmental-engineering point of view the foam material must be chlorofluorocarbon-free. A suitable foam material, particularly for the present insulating element, is polyurethane foam, preferably hardened polyurethane foam. This polyurethane foam is formed on the bottom plate in situ as a result of the exothermal reaction between a polyole compound and an isocyanate compound, which method of foam formation is known and needs therefore no further explanation. In specific embodiments of the present invention it is, however, advisable to use another foam material, for instance polystyrene foam.

As a suitable bottom plate, plates can be mentioned that have been selected from the group consisting of flax fibre plates, gypsium board, chipboard plates, fibre-strengthened plaster boards, Fermacel (brand), wood chip board and plywood. Such plate materials can easily be processed and are cheap and durable. Moreover, such plate materials are suitable for the manufacture of the present insulating elements in a continuous process.

In specific embodiments in accordance with the present invention it is advisable that after the application of the foam material to the bottom plate the foam material that has thus been formed is further provided with a cover layer, preferably from a material selected from a group consisting of paper, glass fibre PE and mineralised glass fibre. Such a cover layer has a strengthening function for the underlying foam material.

The present invention further relates to a device for the manufacture of an insulating element, consisting of a conveyor belt, a device to supply a bottom layer and a spray station to apply the foaming material to the bottom layer, which device in accordance with the present invention is characterised in that downstream from the spray station an interspace-forming device is situated. In specific embodiments it is also advisable that immediately after the spray station a microwave device is placed, particularly with a power of at least 200 watts. By downstream is meant that first the foaming material is applied to the bottom layer in the spray station, after which the bottom layer that has thus been provided with foaming material is introduced to the microwave device and finally to the interspace-forming device. A power below 200 watts is inadvisable because with such a power a high production rate cannot be guaranteed.

It is furthermore advi sabl e to pl ace the mi crowave device such that the microwaves are applied at the foaming side of the bottom layer, so optimal use is made of the microwave energy.

Moreover, it is advisable that the present device has a device to preheat the bottom layer, which device should preferably be placed upstream from the spray station. Such a preheating device, preferably an infrared lamp, ensures that, irrespective of the season of production, the bottom layer has a constant temperature, so that the foaming material that has to be applied to the bottom layer constantly encounters a bottom layer with an equal temperature.

The present invention furthermore relates to an insulating element, consisting of a bottom plate provided with a foam material, in which foam material one or more ribs are located, which insulating element in accordance with the present invention is characterised in that the insulating plate has been obtained by a process in accordance with the present invention.

The present insulating plate is furthermore characterised in that the ribs have been attached to the bottom plate by the milling of interspaces, which preferably extend to the bottom plate, in the foam material. In a specific embodiment it is advisable that the ribs have been attached to the bottom plate by means of an adhesive. Thus the chance of thermal bridges occurring, which thermal bridges cause a decrease of the heat-insulating effect, is minimised.

The present invention furthermore relates to a roof structure in which one or more insulating elements in accordance with the present invention have been used. The insulating elements in accordance with the present invention are particularly suitable for use in pyramid roofs. Since the insulating elements in accordance with the present invention are symmetrical, when sawing or cutting such insulating elements into smaller parts, identical, directly applicable elements are obtained without the formation of refuse material, i.e. elements with the wrong dimensions.

The present invention will be illustrated below by means of an example, but it should, however, be noted that the present invention on no account is limited to such a further described particular embodiment.

The appended figure 1 schematically shows in steps a) - c) the process to manufacture an insulating element in accordance with the present invention, and in step d) the insulating element manufactured in this way in accordance with the present invention is schematically shown. The appended figure 2 schematically shows the present insulating element. In figure 3 the device in accordance with the present invention is shown.

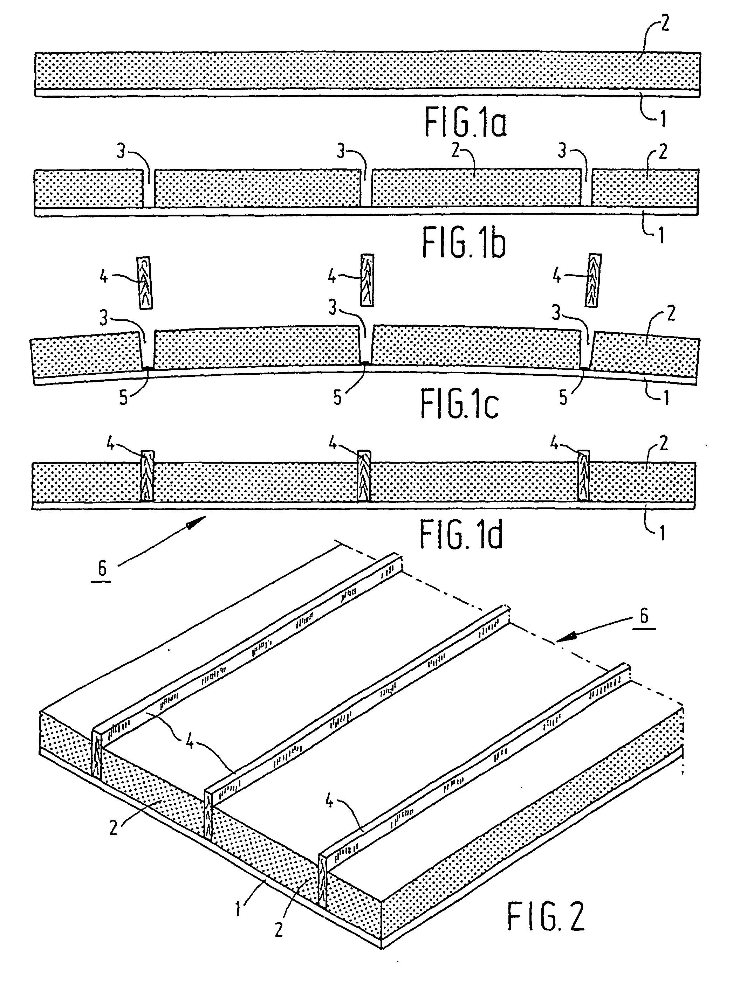

In step a) of the appended figure 1 a bottom plate 1, preferably selected from the group consisting of flax fibre plates, gypsum board, chipboard plates, fibre-strengthened plaster boards, Fermacel (brand), wood chip board and plywood, is supplied over its entire surface with a foam material 2, preferably polyurethane foam. Subsequently in step b), in the foam material 2 formed in this way a number of interspaces 3 are formed, preferably by means of milling, in which interspaces 3 in step c) ribs 4 are placed. Although this is not shown in the figures, it is possible to supply the top of the foam material with a cover layer. In the schematically shown step c) the bottom plate 1 is slightly bent, thus causing the interspaces 3 in which the ribs 4 can be placed to slightly increase in dimension, which ensures easy placing of the ribs 4 in the interspaces 3. After placing the ribs 4, the pressure applied to the bottom plate 1 will be removed, after which the bottom plate 1 will return to its original flat form. The interspace 3 is preferably provided with an adhesive 5 to fix the ribs 4 on the bottom plate 1. Finally, in step d) the final product formed in this way, i.e. insulating element 6, is schematically shown, from which it is clear that the insulating elements 6 manufactured in accordance with such a process have an almost flat bottom plate 1. Insulating element 6 can eventually be sawn into specific dimensions. Although in the appended figure 2 a bottom plate 1 with three ribs 4 is shown, it will be clear that the present invention on no account is limited to such a number of ribs 4. Moreover, to a person skilled in the art it will be clear that the location of ribs 4 on bottom plate 1, as schematically shown in the appended figure, is not limited to these positions. It is therefore also possible to place ribs 4 at the edges of bottom plate 1. Moreover, in specific embodiments it is advisable that one or more ribs 4 extend outside bottom plate 7 (not shown).

Owing to the fact that any tensions present in the foam material will not cause warping of the bottom plate 1, also at long-term storage the insulating element 6 obtained in this way will show no warping of the bottom plate 1. Moreover, it is no longer necessary to place pressure laths (not shown) on ribs 4 after step d), which means that an additional production step can be omitted and thus the production rate can be increased.

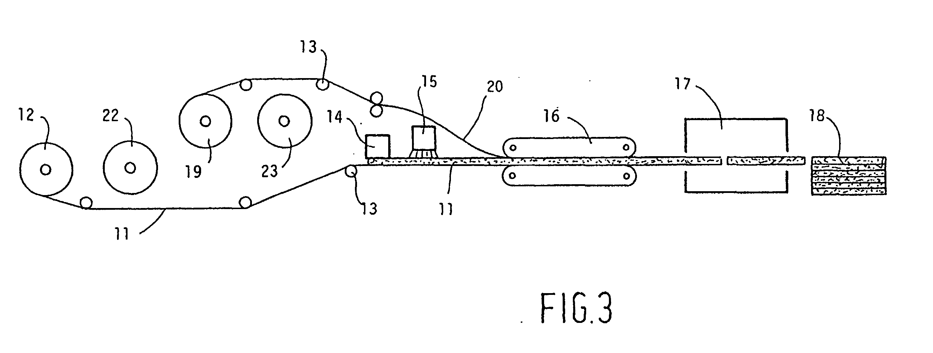

In figure 3 a specific embodiment is shown of the device in accordance with the present invention. Feed roll 12, for instance suppl i ed with a plywood bottom layer 11, is unwound by means of gui de rolls 13, and bottom layer 11 is fed into a pressing device 16. Simultaneously feed roll 19, for instance supplied with a plywood top layer 20, is fed into pressing device 16 by means of guide rolls 13. Rollers 22, 23 are so-called supply rolls, which are being used when feed rolls 12, 19 have been fully unwound. By means of a spray station 14, in which the foam elements are mixed, a foam material is sprayed on bottom layer 11. Downstream a microwave device 15 is placed, which ensures a direct and controlled exothermal foam reaction. Although this is not shown in figure 3, in a specific embodiment it is advisable to preheat the bottom layer 11 with, for example, an infrared lamp, before the foam elements are applied to bottom layer 11 through spray station 14. After the assembly of bottom layer 11, foam material 21 and top layer 20 is fed into pressing device 16, it is possible to manufacture separate elements in unit 17, in which, for example, the formation of interspaces, the placing therein of ribs, the squaring, and the sawing to the desired lengths can take place. Finally insulating elements 18 are obtained. In a specific embodiment the application of the top layer 20 by means of feed roll 19 is, however, left out. Thus the bottom layer 11 is unwound from feed roll 12 and led to spray station 14 by means of guide rolls 13. The foam material sprayed in spray station 14 is subsequently submitted to microwave treatment in device 15. After being submitted to microwaves, the assembly of bottom layer 11 and foam material is fed into press 16, then in unit 17 possibly submitted to after-treatment, like, for instance, the formation of interspaces, the placing therein of ribs, the squaring, and the sawing to the desired lengths, thereby finally obtaining the insulating elements 18. In a special embodiment it is possible that the bottom layer 11 is first preheated, for example by means of an infrared lamp (not shown), after which the thus preheated bottom layer 11 is fed into spray station 14.

The essence of the present invention should therefore be seen in the initial application of a foam material to a bottom plate and the subsequent formation of interspaces in the foam material, in which interspaces ribs are placed. Such a process prevents warping of the bottom plate; warping has an adverse effect on the on-site application of the insulating element. Moreover, a uniform foam layer is obtained by microwave treatment of the foamed material. In addition, thus a symmetrical insulating element is obtained that is particularly suitable for use in pyramid roofs, because identical parts are obtained after cutting or sawing of the present insulating element.

## Claims

1. A process to manufacture an insulating element (6), comprising a foam material (2) in which one or more ribs (4) are located, the process consists of the following steps:
a) the application of a foam material (2) to a bottom plate (1), by spraying a foam material and exerting a foam forming reaction,
b) the formation of one or more interspaces (3) in the foam material (2) formed in this way, and
c) the placing of ribs (4) in the interspaces (3) formed in this way, wherein the interspaces (3) extend to the bottom plate (11).

2. A process according to claim 1, **characterised in that** after step b) the bottom plate (1) is slightly bent, after which step c) is subsequently carried out.

3. A process according to claims 1-2, **characterised in that** the ribs (4) are attached to the bottom plate (1) by means of adherence.

4. A process according to claims 1-3, **characterised in that** step b) is carried out by means of milling.

5. A process according to claims 1-4, **characterised in that** polyurethane foam is used as foam material (2).

6. A process according to claims 1-5, **characterised in that** as bottom plate (1) a plate is used, selected from the group consisting of flax fibre plates, gypsum board, chipboard plates, fibre-strengthened plaster board, Fermacel (brand), wood chip board and plywood.

7. A process according to claims 1-6, **characterised in that** after the application of the foam material (2) in step a), the top of the foam layer is provided with a cover layer.

8. A process according to claim 7, **characterised in that** as cover layer a material is used, selected from the group consisting of paper, glass fibre PE and mineralised glass fibre.

9. A process according to claims 1-8, **characterised in that** the ribs (4) protrude at the cross-cut end of the bottom plate (1).

10. A process according to claim 1, **characterised in that** step a) contains the supply of the bottom plate (1) to a conveyor belt, to which bottom plate (1) the foam material (2) is applied, and the bottom plate (1) thus provided with foaming material (2) is subjected to microwave treatment (15).

11. A process according to claim 10, **characterised in that** the residence time for the subjection to microwave treatment (15) lies between 2 - 20 seconds, and the power is at least 200 Watts.

12. A process according to claims 1-10, **characterised in that** the bottom plate (1) is preheated before being provided with the foaming material (2).

13. A device for the manufacture of an insulating element (16), comprising a conveyor belt, a device for the supply of a bottom plate (1), and a spray station (14) for the application of a foaming material (2) to said bottom plate (1), **characterised in that** downstream from the spray station (14) a device (17) is situated to form interspaces (3) in the foam material (2) which interspaces (3) extend to the bottom plate (1).

14. A device according to claim 13, **characterised in that** a microwave device (15) is situated directly after the spray station (14).

15. A device according to claims 13-14, **characterised in that** upstream from the spray station (14) a device is placed to preheat the bottom plate (1).

16. An insulating element (16) comprising a foam material (2) having one or more interspaces, in which interspaces (3) one or more ribs (4) are situated, **characterised in that** the foam material (2) is provided with a bottom plate (11), wherein the interspaces (3) extend to the bottom plate (1).

17. An insulating element (6) according to claim 16, **characterised in that** the ribs (4) are attached to the bottom plate (1) by means of an adhesive.

18. An insulating element (6) according to claims 16-17, **characterised in that** the top of the foam material is provided with a cover layer.

19. The use of one or more insulating elements (6) manufactured according to the process described in claims 1-12, in a roof structure for a house.

## Patentansprüche

1. Verfahren zur Herstellung eines Isolierelements (6), umfassend ein Schaummaterial (2), in welchem eine oder mehrere Rippen (4) angeordnet sind, welches Verfahren aus den folgenden Schritten besteht:
a) die Auftragung eines Schaummaterials (2) auf eine Grundplatte (1), durch Sprühen eines Schaummaterials und Ausüben einer Schaumbildungsreaktion,
b) die Bildung von einem oder mehreren Zwischenräumen (3) in dem so gebildeten Schaummaterial (2), und
c) die Platzierung von Rippen (4) in die so gebildeten Zwischenräume (3), wobei sich die Zwischenräume (3) zu der Grundplatte (1) erstrecken.

2. Verfahren nach Anspruch 1,
**dadurch gekennzeichnet, dass** nach Schritt b) die Grundplatte (1) leicht gebogen wird, wonach anschließend Schritt c) ausgeführt wird.

3. Verfahren nach einem der Ansprüche 1 bis 2,
**dadurch gekennzeichnet, dass** die Rippen (4) an der Grundplatte (1) mittels Klebung befestigt werden.

4. Verfahren nach einem der Ansprüche 1 bis 3,
**dadurch gekennzeichnet, dass** Schritt b) mittels Fräsung durchgeführt wird.

5. Verfahren nach einem der Ansprüche 1 bis 4,
**dadurch gekennzeichnet, dass** Polyurethan-Schaum als Schaummaterial (2) genutzt wird.

6. Verfahren nach einem der Ansprüche 1 bis 5,
**dadurch gekennzeichnet, dass** als Grundplatte (1) eine Platte genutzt wird, welche aus der folgenden Gruppe ausgewählt wird: Flachsfaserplatten, Gipsplatten, Spanplatten, faserverstärkte Gipsplatten, Fermacel®, Spanholzplatten und Sperrholz bzw. Furnierplatten.

7. Verfahren nach einem der Ansprüche 1 bis 6,
**dadurch gekennzeichnet, dass** nach der Auftragung des Schaummaterials (2) in Schritt a) die Oberseite der Schaumschicht mit einem Deckbelag versehen wird.

8. Verfahren nach Anspruch 7,
**dadurch gekennzeichnet, dass** als Deckbelag ein Material genutzt wird, welches aus der folgenden Gruppe ausgewählt wird: Papier, Glasfaser PE und mineralisierte Glasfaser.

9. Verfahren nach einem der Ansprüche 1 bis 8,
**dadurch gekennzeichnet, dass** die Rippen (4) an dem Querschnittsende der Grundplatte (1) hervorstehen.

10. Verfahren nach Anspruch 1,
**dadurch gekennzeichnet, dass** Schritt a) die Zufuhr der Grundplatte (1) zu einem Förderband enthält, an welche Grundplatte (1) das Schaummaterial (2) aufgetragen wird, und die somit mit Schaummaterial (2) versehene Grundplatte (1) einer Mikrowellenbehandlung (15) ausgesetzt wird.

11. Verfahren nach Anspruch 10,
**dadurch gekennzeichnet, dass** die Aufenthaltszeit für die Aussetzung der Mikrowellenbehandlung (15) zwischen 2 bis 20 Sekunden liegt, und die Leistung wenigstens 200 Watt ist.

12. Verfahren nach einem der Ansprüche 1 bis 10,
**dadurch gekennzeichnet, dass** die Grundplatte (1) vorgeheizt wird, bevor sie mit dem Schaummaterial (2) versehen wird.

13. Vorrichtung für die Herstellung eines Isolierelements (16), umfassend ein Förderband, eine Vorrichtung für die Zufuhr einer Grundplatte (1), und eine Sprühstation (14) für die Auftragung eines Schäummaterials (2) auf die Grundplatte (1),
**dadurch gekennzeichnet, dass** flussabwärts von der Sprühstation (14) eine Vorrichtung (17) angeordnet ist, um Zwischcnräume (3) in das Schaummaterial (2) zu formen, welche Zwischenräume (3) sich zu der Grundplatte (1) erstrecken.

14. Vorrichtung nach Anspruch 13,
**dadurch gekennzeichnet, dass** ein Mikrowellengerät (15) direkt nach der Sprühstation (14) angeordnet ist.

15. Vorrichtung nach einem der Ansprüche 13 bis 14,
**dadurch gekennzeichnet, dass** flussaufwärts von der Sprühstation (14) eine Vorrichtung platziert ist, um die Grundplatte (1) vorzuheizen.

16. Isolierelement (16), umfassend ein Schaummaterial (2) mit einem oder mehreren Zwischenräumen, in welche Zwischenräume (3) eine oder mehrere Rippen (4) angeordnet sind,
**dadurch gekennzeichnet, dass** das Schaummaterial (2) mit einer Grundplatte (11) versehen ist, wobei sich die Zwischenräume (3) zu der Grundplatte (1) erstrecken.

17. Isolierelement (6) nach Anspruch 16,
**dadurch gekennzeichnet, dass** die Rippen (4) an der Grundplatte (1) mittels eines Klebstoffs befestigt sind.

18. Isolierelement (6) nach einem der Ansprüche 16 bis 17,
**dadurch gekennzeichnet, dass** die Oberseite des Schaummaterials mit einer Deckschicht versehen ist.

19. Die Verwendung von einem oder mehreren Isolierelementen (6), welche gemäß dem in Ansprüchen 1 bis 12 beschriebenen Prozess hergestellt wurden in einer Dachstruktur für ein Haus.

## Revendications

1. Procédé pour la fabrication d'un élément isolant (6), comprenant un matériau mousse (2) dans lequel sont placées une ou plusieurs nervures (4), le procédé comportant les étapes suivantes :
a) application du matériau mousse (2) sur une plaque de fond (1), par pulvérisation du matériau mousse et mise en oeuvre d'une réaction de mise en forme de la mousse,
b) formation d'un ou plusieurs espacements (3) dans le matériau mousse (2) obtenu de cette manière, et
c) mise en place des nervures (4) dans les espacements (3) réalisés de cette manière, les espacements (3) se prolongeant jusqu'à la plaque de fond (1).

2. Procédé selon la revendication 1, **caractérisé en ce que**, après l'étape b), la plaque de fond (1) est légèrement courbée, après quoi l'étape c) est exécutée à la suite.

3. Procédé selon les revendications 1 ou 2, dans lequel les nervures (4) sont fixées à la plaque de fond (1) par un moyen d'adhérence.

4. Procédé selon les revendications 1 à 3, **caractérisé en ce que** l'étape b) est réalisée par un moyen de fraisage.

5. Procédé selon les revendications 1 à 4, **caractérisé en ce que** de la mousse de polyuréthane est utilisée comme matériau mousse.

6. Procédé selon les revendications 1 à 5, **caractérisé en ce que** la plaque de fond (1) qui est utilisée est choisie dans le groupe composé des plaques de fibres de lin, les planches de gypse, les plaques d'aggloméré, les planches de plâtre renforcé par des fibres, le Fermacel (marque déposée), les planches de bois aggloméré et le contreplaqué.

7. Procédé selon les revendications 1 à 6, **caractérisé en ce que**, après l'application du matériau mousse (2) à l'étape a), la face supérieure de la couche de mousse est pourvue d'une couche de couverture.

8. Procédé selon la revendication 7, **caractérisé en ce que** le matériau qui est utilisé comme couche de couverture est choisi dans le groupe composé du papier, de la fibre de verre PE et de la fibre de verre minéralisé.

9. Procédé selon les revendications 1 à 8, **caractérisé en ce que** les nervures (4) dépassent du sommet de la section transversale de la plaque de fond (1).

10. Procédé selon la revendication 1, **caractérisé en ce que** l'étape a) comprend la disposition de la plaque de fond (1) sur un convoyeur à bande, sur laquelle plaque de fond (1) est appliquée la couche de mousse (2), et **en ce que** la plaque de fond (1) ainsi pourvue du matériau mousse (2) est soumise à un traitement par micro-ondes (15).

11. Procédé selon la revendication 10, **caractérisé en ce que** la durée d'exposition aux effets du traitement par les micro-ondes s'étend de 2 à 20 secondes, et **en ce que** la puissance est au minimum de 200 watts.

12. Procédé selon les revendications 1 à 10, **caractérisé en ce que** la plaque de fond (1) est préchauffée avant d'être pourvue du matériau mousse (2).

13. Dispositif pour la fabrication d'élément isolant (16), comprenant un convoyeur à bande, un dispositif pour l'alimentation en plaque de fond (1), et une station de pulvérisation (14) pour l'application du matériau mousse (2) sur la dite plaque de fond (1), **caractérisé en ce que**, en aval de la station de pulvérisation (14), est placé un dispositif pour réaliser des espacements (3) dans le matériau mousse (2) lesdits espacements (3) se prolongeant jusqu'à la plaque de fond (1).

14. Dispositif selon la revendication 13, **caractérisé en ce que** le dispositif à micro-ondes (15) est placé directement après la station de pulvérisation (14).

15. Dispositif selon les revendications 13 ou 14, **caractérisé en ce que**, en amont de la station de pulvérisation (14), est placé un dispositif pour préchauffer la plaque de fond (1).

16. Elément isolant (6) comprenant un matériau mousse (2) présentant un ou plusieurs espacements (3), dans lesquels (3) sont placées une ou plusieurs nervures (4), **caractérisé en ce que** le matériau mousse (2) est muni d'une plaque de fond (2), et dans lequel les espacements (3) se prolongent jusqu'à la plaque de fond (1).

17. Elément isolant (6) selon la revendication 16, **caractérisé en ce que** les nervures (4) sont fixées à la plaque de fond (1) par le moyen d'un adhésif.

18. Elément isolant (6) selon les revendications 16 ou 17, **caractérisé en ce que** la face supérieure du matériau mousse est pourvue d'une couche de couverture.

19. Emploi d'un ou plusieurs éléments isolants (6) fabriqués selon le procédé décrit dans les revendications 1 à 12 dans une structure de toiture pour maison.
